# EUROPÄISCHE PATENTSCHRIFT

(11) **EP 3 685 795 B1**
(45) Veröffentlichungstag und Bekanntmachung des Hinweises auf die Patenterteilung: **07.02.2024**
(21) Anmeldenummer: 20162946.6
(22) Anmeldetag: 20.05.2016
(51) Int. Cl.: A61C 8/00

(54) **ENOSSALES EINZELZAHNIMPLANTAT**
ENOSSAL SINGLE-TOOTH IMPLANT
IMPLANT UNITAIRE ENDO-OSSEUX

(30) Priorität: 21.05.2015 DE 102015108098; 17.06.2015 EP 15172612
(43) Veröffentlichungstag der Anmeldung: 29.07.2020
(62) Teilanmeldung aus: 16727145.1
(73) Patentinhaber: LOGON OMF Bioactive Systems GmbH, 75179 Pforzheim (DE)
(72) Erfinder: Dürr, Walter, 75196 Remchingen (DE)
(74) Vertreter: Nobbe, Matthias

(56) Entgegenhaltungen:
- EP-A1- 1 728 486
- EP-A1- 2 347 729
- EP-A1- 2 829 250
- WO-A1-98/52488
- WO-A1-2015/090280
- DE-A1- 19 509 762
- US-A1- 2007 059 666
- US-A1- 2009 111 072

## Beschreibung

Die Erfindung betrifft ein enossales Einzelzahnimplantat mit den Merkmalen des Patentanspruches 1 sowie Weiterbildungen davon.

Bei einem Einzelzahnimplantat, wie es aus der DE 40 28 855 C2 bekannt und auch Gegenstand der DE 195 09 762.9-32 ist, erfolgt die Verdrehsicherung in der Weise, dass die Grundkörper-Formschlusselemente am Boden der Ringausnehmung des Grundkörpers und die Distanzhülsen-Formschlusselemente, die hierzu komplementär sind, am zervikalen Stirnrand des Zentrierbundes der Distanzhülse vorgesehen sind. Fertigungstechnisch sind derartige Formschlusselemente nur verhältnismäßig schwierig herzustellen, wobei es ferner in manchen Anwendungsfällen nicht sonderlich günstig ist, dass nicht die volle Tiefe der Ringausnehmung bzw. des Zentrierbundes zum Zentrieren, Fixieren und Sichern der Distanzhülse relativ zum Grundkörper zur Verfügung steht.

Auch bei einem anderen Dentalimplantat, wie es aus der DE 37 35 378 vorgesehen ist, treten Schwierigkeiten ähnlicher Art auf, die darauf beruhen, dass auch dort die Formschlusselemente des Grundkörpers mit Abstand von dessen koronalen Stirnrand innerhalb einer Blindbohrung des Grundkörpers liegen.

Aus der DE 41 27 839 A1 ist ein Implantat-Grundkörper bekannt, dessen zentrale Ringausnehmung ein Formschlusselement aufweist, welches sich unmittelbar an den koronalen Stirnrand des Grundkörpers anschließt, wobei das Formschlusselement nutenförmig gestaltet ist und das in dem Grundkörper einzusetzende Halteteil eine dazu komplementäre Gestaltung aufweist. Ein gesonderter Implantatpfosten oder Halteschraube ist dabei nicht vorgesehen.

Aus der DE 195 34 979 C1 ist ein Einzelzahnimplantat bekannt, bei dem die Formschlusselemente des Grundkörpers unmittelbar im Anschluss an dessen koronalen Stirnrand mit entsprechender Anordnung und Ausbildung der hierzu komplementären Abutment-Formschlusselemente angeordnet sind. Dadurch, dass die gesamte Tiefe der Ringausnehmung des Grundkörpers für die Zentrierung und Führung des Abutments zur Verfügung steht, soll sich eine deutlich verbesserte Stabilität der Verbindung zwischen Distanzhülse und Grundkörper bei einem größeren Gestaltungsspielraum in der Art der Teilung sowie der Formgebung der Formschlusselemente ergeben.

Die EP 1728486 betrifft ein Zahnimplantat zur Verwendung in einem Zahnimplantatsystem, wobei das Zahnimplantat mit einer Führungs- und Verriegelungseinrichtung zum Verbinden des Zahnimplantats mit einem Abutment versehen ist, wobei die Führungs- und Verriegelungseinrichtung einen ersten konisch zulaufenden Abschnitt, einen zweiten, im Wesentlichen nicht konisch zulaufenden Abschnitt, der apikal neben dem ersten Abschnitt angeordnet ist und mit einer Anti-Rotationseinrichtung versehen ist; und einen dritten, im wesentlichen kreiszylindrischen Abschnitt, der apikal neben dem zweiten Abschnitt angeordnet ist, um eine axiale Führung zu einem Abutment beim Einsetzen desselben in das Zahnimplantat zu gewährleisten, umfasst.

Bei allen derartigen Zahnimplantaten wird die Implantation in der Regel so durchgeführt, dass zunächst der Knochen vorzugsweise nur an der geplanten Implantatposition, freigelegt wird, um den Knochen optimal für eine Implantation vorbereiten zu können, und dabei wird oft ein Zahnfleischlappen (Mucoperiost oder Mucogingival) präpariert. Bei guten Knochenverhältnissen und ausreichend breiter fixierter Gingiva kann ein Zahnimplantat auch ohne diese Freilegung / Aufklappung des Zahnfleisches mittels Zahnfleischausstanzung in einer transgingivalen Implantation gesetzt werden. Mit speziellen Bohrern wird dann das Implantatbett aufbereitet, wobei eine Bohrschablone verwendet werden kann, um die aus prothetischer Sicht optimale Position und genaue Bohrrichtung für die optimale Position und Ausrichtung des Implantates zu gewährleisten. Das Implantat wird dann passgenau in den Kieferknochen eingebracht, wobei die so genannte Primärstabilität (erste mechanische Stabilität) einer der wichtigen Erfolgsfaktoren für die Osseointegration ist.

Dabei unterscheidet man beim Setzen der Implantate zwischen einer einphasigen Modalität mit offener Einheilung und einer zweiphasigen Modalität mit geschlossener Einheilung. Das Implantat (Grundkörper) wird auf das nach Herstellervorgaben angegebene Niveau relativ zum freigelegten Knochenniveau gesetzt. Bei der zweiphasigen Vorgehensweise wird der präparierte Lappen über dem oberen Ende des Grundkörpers, verschlossen beispielsweise durch eine Verschlusschraube, vernäht. Nach der Einheilung wird das Implantat in einem zweiten Eingriff freigelegt, um mit der prothetischen Versorgung zu beginnen. Bei Implantationen, die mit Knochen aufbauenden Maßnahmen verbunden sind, bietet diese zweizeitige Vorgehensweise Schutz vor äußeren Einflüssen.

Bei der einphasigen Vorgehensweise heilen Implantate "offen" ein. Das bedeutet, dass ein Implantat nach dem Setzen während der Einheilung aus der Schleimhaut herausragen kann und in der Regel eine temporäre Zahnkrone oder einen Gingivaformer trägt. Der Implantatkopf kann dann oberhalb des Schleimhaut-Niveaus liegen, und ein Eingriff für die Freilegung des Implantates entfällt.

Beiden Vorgehensweisen ist gemeinsam, dass der Grundkörper in den Kieferknochen des Patienten zumeist durch Einschrauben in eine vom Implantologen gesetzte Bohrung eingebracht wird. Nach der Osseointegration wird in einer nächsten Stufe ein Abutment in den Grundkörper eingesetzt und mittels einer Halteschraube am Grundkörper fixiert. Auf dem Abutment wird in der Regel eine Krone befestigt. Die Phase der Osseointegration dauert je nach Patient oft bis zu mehreren Monaten, und dabei ist es für ein störungsfreies Einwachsen wichtig, dass der Grundkörper in der ersten Stufe der implantologischen Maßnahmen möglichst keimfrei an den Implantationsort gebracht und während der Implantation auch weiterhin so keimfrei gehalten wird. Hierzu können insbesondere während des Einbringens des Grundkörpers in den Kiefer und vor Verschluss des Grundkörpers besondere Maßnahmen zur Keimfreiheit notwendig sein, um eine störungsfreie Osseointegration zu gewährleisten.

Die Aufgabe der Erfindung besteht daher darin, das Handling bei der Einbringung eines Zahnimplantats zu verbessern und so ein verbessertes System für die Einbringung bereitzustellen und dabei als Folge die Osseointegration zu verbessern. So kann das Infektionsrisiko vermindert und der Entwicklung einer pathologischen bakteriell bedingten Desintegration vorgebeugt werden und infolgedessen der Einwachsvorgang, der sich nach Abschluss der Remodellingvorgänge bis zur Endfestigkeit des Implantates im Kiefer über einige Monate erstrecken kann, unterstützt werden.

Erfindungsgemäß wird diese Aufgabe bei einem gattungsgemäßen Einzelzahnimplantat durch die Kombination der Merkmale gemäß dem Patentanspruch 1 gelöst. Besondere Ausführungsformen der Erfindung sind Gegenstand der Unteransprüche und des Nebenanspruches.

So offenbart die vorliegende Patentanmeldung ein enossales Einzelzahnimplantat für einen festsitzenden Zahnersatz, mit
- einem im Wesentlichen zylindrischen, in eine in einen Kieferknochen eingebrachte Bohrung einsetzbaren Grundkörper mit einer Ringausnehmung und mit einer zu seinem koronalen Ende hin offenen, apikal zu der Ringausnehmung angeordneten Bohrung, die einen am apikalen Ende im Grundkörper angeordneten Gewindeabschnitt zur Festlegung einer Halteschraube aufweist, wobei die Ringausnehmung einen Führungsabschnitt, einen sich koronal an den Führungsabschnitt anschließenden Formschlussabschnitt und einen sich koronal an den Formschlussabschnitt anschließenden Endabschnitt umfasst,
- einem in die Ringausnehmung des Grundkörpers einsetzbaren Abutment mit einem Führungsabschnitt, mit einem Formschlussabschnitt, mit einem Endabschnitt, mit einer Bohrung zur Aufnahme der Halteschraube und mit einem Befestigungskopf für den Zahnersatz, und
- einer in die Bohrung des Abutments und des Grundkörpers einsetzbaren und durchsetzenden Halteschraube,
- wobei der Formschlussabschnitt des Grundkörpers und der Formschlussabschnitt des Abutments zwei bis sechs in der Form zueinander komplementäre Formschlusselementpaare in Form von radial nach innen gerichteten und zur Längsachse des Grundkörpers koaxialen Federstegen am Grundkörper und korrespondierenden Nuten mit Nutflächen und zwei Nutkanten am Abutment nach Art einer Nut-Feder-Verbindung aufweisen, wobei der Formschlussabschnitt des Grundkörpers und der Formschlussabschnitt des Abutments zwei bis sechs in der Form zueinander komplementäre Innenkant-Außenkant-Paare in Form von Innenkantflächen am Grundkörper und korrespondierenden Außenkantflächen am Abutment aufweisen, die jeweils umfangsmäßig vorzugsweise alternierend mit den Formschlusselementen in Grundkörper und Abutment ausgebildet sind,
wobei die Innenkantflächen am Grundkörper und die korrespondierenden Außenkantflächen am Abutment beim Einsetzen des Abutments in den Grundkörper zumindest teilweise zur Anlage kommen.

In einer Weiterbildung betrifft die Erfindung ein wie zuvor beschriebenes enossales Einzelzahnimplantat für einen festsitzenden Zahnersatz, wobei jede zur Längsachse des Grundkörpers koaxiale Nutkante der Nuten an der zur Längsachse des Grundkörpers koaxialen Federstegwurzel des korrespondierenden Federsteges zur Anlage kommt.

In einer weiteren Ausführungsform betrifft die Erfindung ein wie zuvor beschriebenes enossales Einzelzahnimplantat für einen festsitzenden Zahnersatz, wobei die Stegseitenflächen jedes Federsteges am Grundkörper und die Nutflächen der Nuten am Abutment beim Einsetzen des Abutments in den Grundkörper zumindest teilweise zur Anlage kommen.

Darüber hinaus betrifft die vorliegende Erfindung auch ein Abutment für ein enossales Einzelzahnimplantat für einen festsitzenden Zahnersatz wie zuvor beschrieben, mit einem Führungsabschnitt, mit einem Formschlussabschnitt, mit einem Endabschnitt, mit einer Bohrung zur Aufnahme der Halteschraube und mit einem Befestigungskopf für den Zahnersatz,
- wobei im Formschlussabschnitt des Abutments zwei bis sechs, insbesondere drei, zur Längsachse des Abutments koaxiale Nuten mit Nutflächen und Nutkanten, die zur Ausbildung einer Nut-Feder-Verbindung mit Federstegen am Grundkörper ausgebildet sind, angeordnet sind,
- wobei im Formschlussabschnitt des Abutments zwei bis sechs, insbesondere drei, Außenkantflächen, die zur Ausbildung eines Innenkant-Außenkant-Paares mit Innenkantflächen am Grundkörper ausgebildet und die umfangsmäßig jeweils vorzugsweise alternierend mit den Nuten am Abutment ausgebildet sind, und
- wobei jede zur Längsachse des Abutments koaxiale Nutkante so ausgebildet ist, dass die Nutkante in der Gebrauchsposition an der zur Längsachse des Grundkörpers koaxialen Federstegwurzel des korrespondierenden Federsteges zur Anlage kommt, und wobei die Nutflächen am Abutment so ausgebildet sind, dass sie mit den korrespondierenden Stegseitenflächen am Grundkörper beim Einsetzen des Abutments in den Grundkörper zumindest teilweise zur Anlage kommen.

Ein Einzelzahnimplantat, das unter Verwendung eines Insertionssets zum Eindrehen des Grundkörpers und nach anschließendem Einsetzen eines Abutments in dem Kieferknochen angeordnet werden kann, umfasst somit einen Grundkörper, ein in den Grundkörper einsetzbares Abutment sowie eine den Grundkörper und das Abutment durchdringende Halteschraube, die die Position des Abutments gegenüber dem Grundkörper festlegt und in einen am apikalen Ende des Grundkörpers vorgesehenen Gewindeabschnitt einschraubbar ist.

Der Grundkörper weist wie beschrieben eine Ringausnehmung auf, in die nach Einheilung des Grundkörpers im Kiefer und nach Entfernen der Halteschraube und der Eindrehbasis das Abutment einsetzbar ist. Die Ringausnehmung umfasst dabei einen Führungsabschnitt am apikalen Ende der Ringausnehmung, einen Formschlussabschnitt und einen koronalen Endabschnitt, an die entsprechenden Abschnitte des Abutments komplementär angepasst sind. Der koronale Endabschnitt im Grundkörper ist vorzugsweise zylindrisch ausgebildet, an den der entsprechende Abschnitt im Abutment angepasst ist. In den Formschlussabschnitten sind zu den Eindrehelementen unterschiedliche Formschlusselemente wie Stege und Nuten angeordnet, die die relative Bewegung von Abutment und Grundkörper in Umfangsrichtung verhindern. Dabei ist die Ausführung des Grundkörpers mit axialen Stegen, die in axiale Nuten am Abutment eingreifen, vorgesehen.

Die Führungsabschnitte an Grundkörper und Abutment sind zueinander jeweils nach Art einer Spielpassung ausgebildet. So wird eine zuverlässige Führung des Abutments im Grundkörper ermöglicht. Dabei sind Führungsabschnitt und Formschlussabschnitt als zwei distinkte Abschnitte ausgebildet sind, so dass beim Einschieben des Abutments die jeweiligen Führungsabschnitte an Grundkörper/Abutment in Eingriff kommen, bevor der Formschlussabschnitt in Eingriff gebracht wird.

Bei einer solchen Spielpassung ist das radiale Höchstmaß des Führungsabschnittes des Abutments kleiner als das radiale Mindestmaß des Führungsabschnittes des Grundkörpers. Dabei sind die Toleranzfelder so gewählt, dass das Spiel, also der maximale radiale Abstand zwischen Mindestmaß des Führungsabschnittes des Abutments und Höchstmaß des Führungsabschnittes des Grundkörpers, einen für Einschubwiderstand und Führung vertretbaren Wert erhält.

Nach Eindrehen des Grundkörpers in den Kiefer ist ein Abutment umfangsmäßig ausrichtbar in den Grundkörper einsetzbar, wobei Formschlusselemente wie die Federstege an Grundkörper und die Nuten an Abutment miteinander in Eingriff gebracht werden und dabei Grundkörper und Abutment rotationsgesichert zueinander festlegen. Anschließend werden Grundkörper und Abutment über eine Halteschraube in der zueinander festgelegten Position fixiert.

Der Formschlussabschnitt des Grundkörpers und der Formschlussabschnitt des Abutments sind in der Form so aufeinander abgestimmt, dass das Abutment in die Ausnehmung des Grundkörpers so eingesetzt werden kann, dass die jeweiligen Stege und Nuten miteinander in Eingriff gebracht werden und so eine Bewegung in Umfangsrichtung verhindern. Die jeweiligen Formschlussabschnitte können als hohlzylindrische Bereiche der Ringausnehmung, auch mit Abschnitten mit unterschiedlichen Durchmessern, im Grundkörper und dazu jeweils korrespondierendem außenzylindrischem Abschnitt oder Abschnitten des Abutments gestaltet sein.

Die erfindungsgemäße Ausgestaltung des enossalen Einzelzahnimplantates läßt die Verwendung von verschiedenen Materialien und Materialkombination zu, die aus der Gruppe der Metalle, der metallischen Legierungen, keramischen Materialien und Kombinationen davon ausgewählt werden können.

Dabei kann der Grundkörper bevorzugt aus einem Material, das aus dieser Gruppe der Metalle, der metallischen Legierungen, keramischen Materialien und Kombinationen davon ausgewählt werden. Bevorzugt besteht das eingesetzte Implantatmaterial und Insertionsset insgesamt aus metallischen Materialien wie Reintitan oder metallischen Titanlegierungen, Chrom/Nickel/Aluminium/Vanadium/ Kobalt-Legierungen (z.B. TiAIV4, TiAIFe2,5), Edelstählen (z.B. V2A, V4A, Chrom-Nickel 316L), keramischen Materialien wie Hydroxylapatit, Aluminiumoxid, Zirkondioxid oder aus einer Kombination davon, bei der das metallische Material als Verbundmaterial mit keramischem Material vorliegt.

Die folgende detailliertere Beschreibung der Elemente der Erfindung gilt insoweit jeweils für alle Ausführungsformen der Erfindung, sofern nicht Gegenteiliges festgehalten ist.

Erfindungsgemäß erlaubt der axial apikal zum Formschlußabschnitt vorgesehene und zylindrisch ausgeführte Führungsabschnitt eine zuverlässige und stabile Fixierung des Abutments im Grundkörper durch die Halteschraube, da die jeweiligen Bauteile über Führungsabschnitt mit einer Spielpassung nach Art einer Rohr-in-Rohr-Lagerung gelagert sind. Die radialen Innendurchmesser von Führungsabschnitt im Grundkörper und der Außendurchmesser im Abutment sind so gewählt, dass die Wandstärke im Grundkörper ausreichend ist, um bei lateraler oder winkliger Belastung des Implantates während des Kauvorganges Verformungen der Grundkörperwände zu vermeiden.

Erfindungsgemäß sind die zueinander komplementären Formschlusselemente an Grundkörper und Abutment jeweils in Form einer Vaterteil-Mutterteil-Verbindung ausgebildet, wobei das/die Vaterteil(e) an dem Grundkörper angeordnet ist/sind. Aufgrund der so gewählten Anordnung ist infolge der Vermeidung einer Verringerung der Wandstärke des Grundkörpers auch bei keramischen Werkstoffen eine präzise Kraftübertragung möglich, die die Verwendung von voll- oder teilkeramischem Grundkörper neben den bekannten Metallen und legierten Materialien, ermöglicht.

Erfindungsgemäß hat das Vaterteil-Formschlusselement jeweils die Form eines sich parallel zur Längsachse des Grundkörpers erstreckenden Federsteges, der in jeweils ein korrespondierendes Mutterteil am anderen Bauteil, eine Nut, verdrehgesichert eingreift. Die Formschlusselemente können durch mechanische Bearbeitung wie Fräsen, Bohren etc. aus den Bauteilen Grundkörper und Abutment herausgearbeitet werden.

Der Formschlussabschnitt ist zylindrisch ausgebildet. Bei einer zylindrischen Ausbildung ist der Formschlussabschnitt an dem Abutment in der Form eines zylindrischen Abschnittes ausgebildet, der mit seinem Außendurchmesser der hohlzylindrischen Bohrung am Grundkörper in der Länge und dem Durchmesser angepasst ist.

Der Federsteg kann erfindungsgemäß vorteilhaft in Form einer gefrästen Nase, Steges oder eines jeweils in einer Blindbohrung (Haltebohrung) gehaltenen Stiftes ausgebildet sein. Der Stift kann einen, bevorzugt kreisförmigen, oder regelmäßig- oder unregelmäßigpolygonalen Querschnitt haben, von dem ein Querschnittssegment aus der Nut in der konischen Wandung radial zur Richtung der Längsmittelachse des Grundkörpers hervorsteht und bis über die maximale axiale Länge des Formschlussabschnittes den Federsteg ausbilden kann. In der einfachsten Form kann ein Stift eine zylindrische Form haben und beispielsweise in einer Drahtziehmaschine hergestellt sein.

Für den Implantatpfosten/Halteschraube ist in der Blindbohrung apikal von dem konischen Formschluss- und Zentrierabschnitt des Grundkörpers ein Innengewinde vorgesehen, wobei die Halteschraube das Abutment auch vollständig durchsetzt.

Es ist auch ein Aspekt der vorliegenden Erfindung, dass - neben einer vereinfachten mechanischen Bearbeitung der Bauteile und dem vereinfachten Handling - die Bedingungen während der einphasigen oder zweiphasigen Implantation besonders in der Einheilphase möglichst keimfrei im Grundkörper gehalten werden können und so auch eine ausgewogene mechanische Stabilität bei der Einbringung des Implantates in den Kiefer und dessen Gebrauch beim Kauvorgang erzielt werden kann, was bei den im Stand der Technik bekannten Systemen so nicht gegeben ist.

Nachstehend sind Ausführungsbeispiele des erfindungsgemäßen Grundkörpers und Abutments und seiner Bauteile anhand der schematischen Zeichnungen im Einzelnen erläutert. Dabei zeigen:
**Fig. 1** ein Ausführungsbeispiel eines erfindungsgemäßen Implantat-Grundkörpers im axialen Längsschnitt entlang der in der Draufsicht rechts gezeigten Ebene, sowie jeweils eine Draufsicht von unten und von oben auf den Grundkörper;
**Fig. 2** ein Ausführungsbeispiel eines mit dem Grundkörper gemäß dem beschreibungsgemäßen Insertionsset wie in Fig. 1 gezeigt verwendbaren Abutments im axialen Längsschnitt entlang der in der Draufsicht rechts gezeigten Ebene, sowie eine Draufsicht von oben auf das Abutment;
**Fig. 3A** ein Ausführungsbeispiel eines Grundkörpers mit einem in den Grundkörper eingesetzten und mit Halteschraube gesicherten Abutment in der Draufsicht sowie im axialen Längsschnitt entlang der Ebene A-A in der Draufsicht
**Fig. 3B** eine Querschnittsansicht des Ausführungsbeispiels aus Fig 3A auf Höhe der Grundkörper-Abutment-Verbindung in der in der Draufsicht rechts gezeigten Ebene B-B, sowie eine Detailansicht davon.

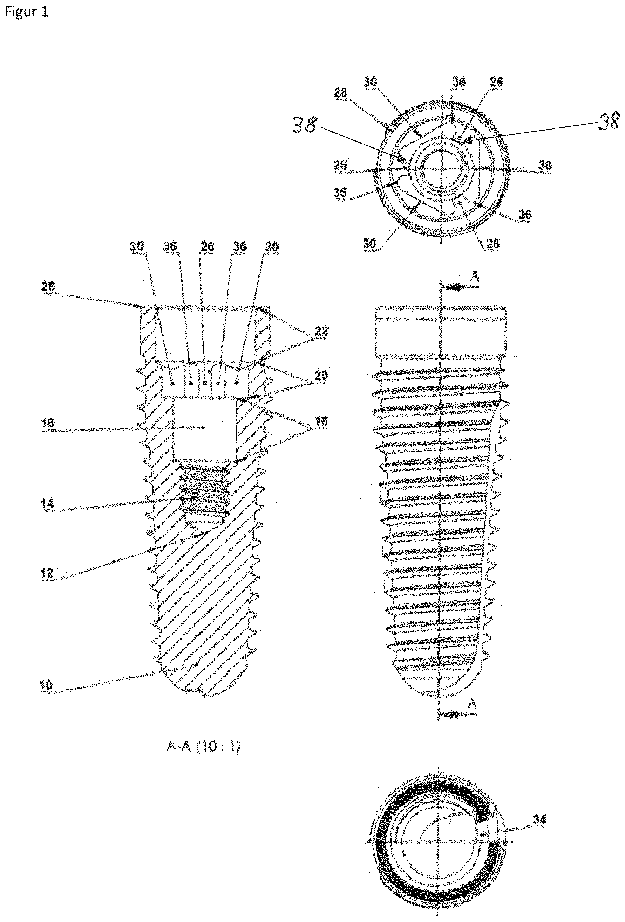

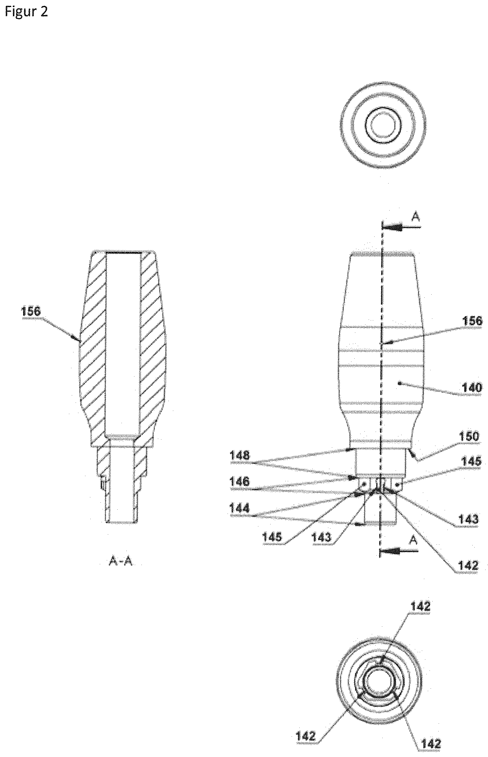

Wie in Fig. 1 gezeigt, ist der Grundkörper 10 an apikalen Ende geschlossen ausgebildet und weist eine zu seinem in Fig. 1 oben liegenden koronalen Ende hin offene Blindbohrung 12 mit einem Innengewinde 14 am apikalen Ende der Blindbohrung 12 auf. In das Innengewinde ist eine in Fig. 2 zeichnerisch nicht dargestellte Halteschraube 60 für ein Abutment 140 einschraubbar. An das Innengewinde 14 des Grundkörpers 10 schließt in koronaler Richtung eine hohlzylindrische Ringausnehmung 16 mit gegenüber dem Innengewinde 14 vergrößerten Innendurchmesser an. Die Ringausnehmung 16 weist in der dargestellten Form drei Bereiche 18; 20; 22 auf. So weist die Ringausnehmung 16 gemäß Figur 2 einen an das Innengewinde 14 koronal anschließenden Führungsabschnitt 18 auf. An den Führungsabschnitt 18 der Ringausnehmung 16 schließt sich in koronaler Richtung ein Formschlussabschnitt 20 an, der einen gegenüber dem Führungsabschnitt 18 vergrößerten Innendurchmesser hat und eine zumindest abschnittsweise konische Innenwandung mit - in der Ausführungsform gemäß Figur 2 - drei radial nach innen gerichteten Federstegen 26 aufweisen kann. Die Federstege 26 sind zu den Nuten 142 an dem in Figur 8 gezeigten Abutment 140 nach Art einer Nut-Feder-Verbindung korrespondierend ausgebildet und können vorzugsweise derart bemessen sein, dass sie sich über die gesamte axiale Länge des Formschlussabschnittes 20 erstrecken. Die Federstege 26 können durch maschinelle mechanische oder elektrochemische Bearbeitung aus dem Grundkörper ausgebildet sein.

In dem Formschlussabschnitt 20 ist gemäß Fig. 1 bevorzugt zwischen je zwei Federstegen 26 je eine Innenkantfläche 30 als Eindrehelement vorgesehen, an dem jeweils eine korrespondierende, formkomplementäre Außenkantfläche einer Eindrehbasis eines nicht dargestellten Insertionssets als Eindrehelement während des Eindrehvorganges des Grundkörpers 10 in den Kiefer anliegen kann. Zusätzlich kann ein als Außenmehrkantfläche gestaltetes Eindrehelement an der Eindrehbasis oder dem Eindrehkörper jeweils so ausgebildet sein, daß die Planfläche der Außenkantfläche der Eindrehbasis, die auch radial vorspringend ausgebildet sein kann, zumindest in Eindrehrichtung mit einer Nutkante, die beim Eindrehen des Grundkörpers in den Kiefer an der korrespondierenden Stegseitenfläche 38an der Stegwurzel 36, nicht jedoch an der Stegspitze zur Anlage kommen kann und so die Übertragung des Drehmomentes auf den Grundkörper unterstützt, ohne daß die Stegspitze beim Eindrehen beschädigt werden kann.

Aus mechanischen und geometrischen Gründen ist die Verwendung von drei Eindrehelementen wie beispielsweise Innenkantflächen am Grundkörper 10 vorteilhaft. Zwischen den Innenkantflächen sind bei den Ausführungsformen gemäß der Erfindung jeweils Federstege 26 in entsprechender Anzahl vorgesehen sein, wobei die Federstege und die Innenkantflächen sich aus Gründen einer verbesserten Kraftübertragung axial über die gesamte axiale Länge des Formschlussabschnittes erstrecken können und über die formkomplementäre Außenkantflächen der Eindrehbasis eines nicht dargestellten Insertionssets die Drehmomentübertragung ermöglichen.

Das in Fig. 2 gezeigte Abutment 140 dient über den Befestigungskopf 152 zur Befestigung für einen nicht gezeigten festsitzenden Zahnersatz. Der Befestigungskopf 152 ist dabei auf die am Implantationsort im Kiefer gegebene individuelle räumliche Situation anpassbar und kann konisch, geneigt und/oder konvex geformt sein. In Gebrauchsposition unterhalb des an den Stirnrand 28 des Grundkörpers 10 aufsetzbaren Dichtkragen 150 weist das Abutment 140 in apikaler Richtung einen Endabschnitt 148, der eine nicht dargestellte umlaufende Nut für die Aufnahme eines Dichtmittels wie eines nicht dargestellten O-Rings im Endabschnitt 148 aufweisen kann, dazu apikal einen Formschlussabschnitt 146 und einen Führungsabschnitt 144 auf. Im Formschlussabschnitt 146 sind eine Anzahl von axial verlaufenden Nuten 142 vorgesehen, die in ihrer Form und Anordnung, aber nicht notwendigerweise in ihrer Anzahl, den Federstegen 26 im Formschlussabschnitt 20 des Grundkörpers 10 entsprechen. Im eingesetzten Zustand sind die Nuten 142 mit den Federstegen 26 in Eingriff, während die Eindrehelemente 30 am Grundkörper 10 auch ohne Kontakt zum Abutment 140 sein können, bevorzugt aber in Kontakt/Anlage sind. Bevorzugt stützt sich zumindest die Nutkante 143 in Eindrehrichtung an der Stegwurzel 36 des Federsteges 26 am Grundkörper 10 ab. So wird zuverlässig erreicht, daß die Federstege nicht durch die Drehbewegung abgeschert werden. Details der Grundkörper-Abutment-Verbindung sind der Fig. 9B gezeigt.

Beim Einsetzen des Abutments 140, das mit einer axialen Längsbohrung versehen ist, deren Innendurchmesser etwa dem Außendurchmesser der in Fig. 1 nicht gezeigten Halteschraube entspricht, in den Grundkörper 10 greift der Führungsabschnitt 144 in den Führungsabschnitt 18 der Ringausnehmung 16 des Grundkörpers 10 ein, wobei die Zylindermantelfläche des Führungsabschnittes 144 an der Innenzylindermantelfläche des Führungsabschnittes 18 des Grundkörpers 10 zur Anlage kommt.

Der Endabschnitt 148 des Abutments 140 kann mit Paßsitz in dem Endabschnitt 22 des Grundkörpers 10 angeordnet sein. Die Federstege 26 greifen in die Nuten 142 ein, während der Dichtkragen 150 am Stirnrand 28 zur Anlage kommt. Damit ist das Abutment 140 dicht und formschlüssig verdrehgesichert zu dem Grundkörper 10 festgelegt.

Mittels einer das Abutment 140 durchsetzenden Halteschraube, die der Halteschraube 60 entsprechen kann und die in das Innengewinde 14 des Grundkörpers 10 einschraubbar ist, lässt sich das Abutment 140 drehfest mit dem Grundkörper 10 verbinden. Um das Entfernen des Abutments 140 aus dem Grundkörper 10 zu erleichtern, kann in der das Abutment durchsetzenden Bohrung ein in Fig. 2 nicht dargestelltes Innengewinde vorgesehen sein, in das nach Entfernen der Halteschraube ein nicht dargestellter Abdrückpfosten mit Außengewinde einschraubbar ist, der sich mit seinem apikalen Ende am Innengewinde 14 des Grundkörpers abstützt. Beim Einschrauben des Abdrückpfostens wird das Abutment 140 dann aus dem Grundkörper 10 koronal angehoben und kann entnommen werden.

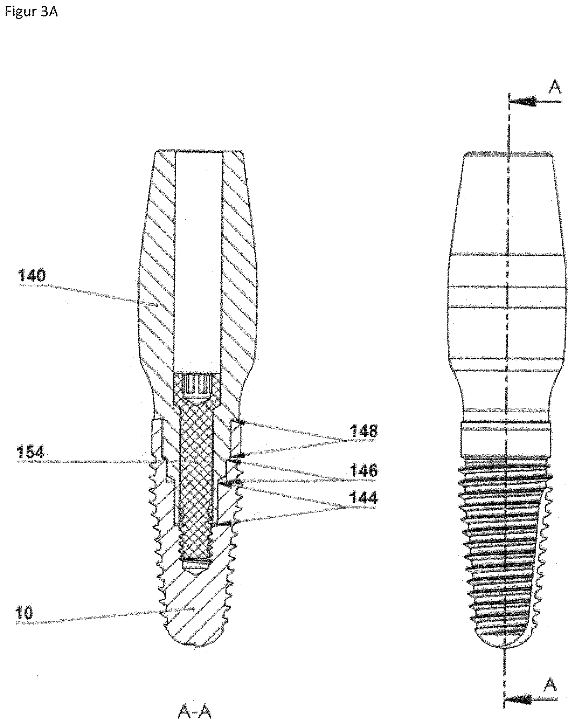

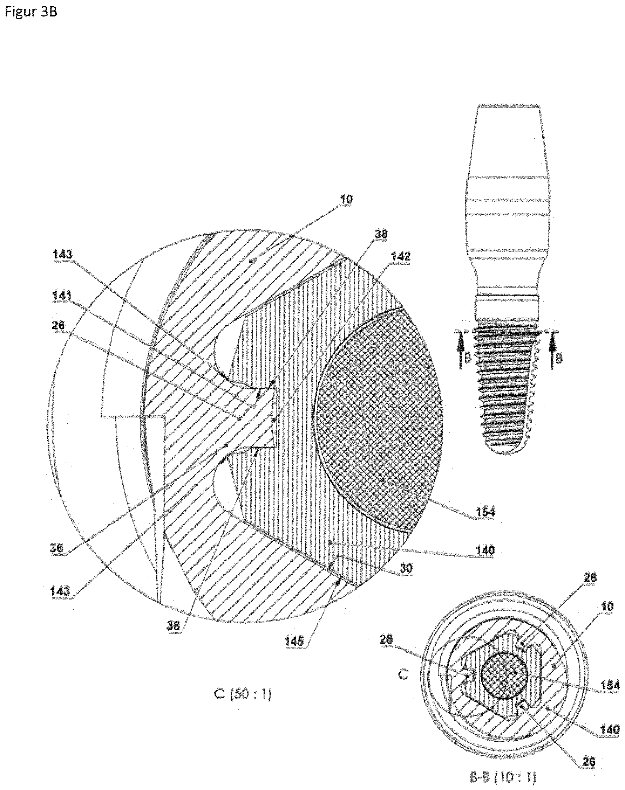

Das in Fig. 3A gezeigte Ausführungsbeispiel eines Grundkörpers 10 mit einem in den Grundkörper eingesetzten und mit Halteschraube 154 gesicherten Abutment 140 in der Draufsicht sowie im axialen Längsschnitt in der Draufsicht entlang der Ebene A-A s wird in der vergrößerten Querschnittsansicht gemäß Fig. 3B in der in der Draufsicht rechts gezeigten Ebene B-B, sowie in der Detailansicht in Fg. 3B weiter erläutert.

Wie dort gezeigt, weist der Formschlussabschnitt (20) des Grundkörpers (10) und der Formschlussabschnitt (146) des Abutments (140) zwei bis sechs in der Form zueinander komplementäre Formschlusselementpaare (26; 142) in Form von radial nach innen gerichteten und zur Längsachse des Grundkörpers koaxialen Federstegen (26) am Grundkörper (10) und korrespondierenden Nuten (142) mit Nutflächen (141) und zwei Nutkanten (143) am Abutment (140) nach Art einer Nut-Feder-Verbindung auf, wobei der Formschlussabschnitt (20) des Grundkörpers (10) und der Formschlussabschnitt (146) des Abutments (140) ) zwei bis sechs in der Form zueinander komplementäre Innenkant-Außenkant-Paare in Form von Innenkantflächen am Grundkörper (10) und korrespondierenden Außenkantflächen am Abutment (140) aufweisen, die jeweils umfangsmäßig vorzugsweise alternierend mit den Formschlusselementen in Grundkörper (10) und Abutment (140) ausgebildet sind. Dabei kommen die Innenkantflächen (30) am Grundkörper (10) und die korrespondierenden Außenkantflächen (145) am Abutment (140) beim Einsetzen des Abutments (140) in den Grundkörper (10) zumindest teilweise zur Anlage kommen.

Ferner kann dabei besonders jede zur Längsachse des Grundkörpers koaxiale Nutkante (143) der Nuten (142) an der zur Längsachse des Grundkörpers koaxialen Federstegwurzel (36) des korrespondierenden Federsteges (26) zur Anlage kommen.

Die Stegseitenflächen (38) jedes Federsteges (26) am Grundkörper (10) und die Nutflächen (141) der Nuten (142) am Abutment (140) kommen beim Einsetzen des Abutments (140) in den Grundkörper (10) zumindest teilweise zur Anlage.

### Bezugszeichenliste

10 Grundkörper
12 Bohrung
14 Innengewinde
16 Ringausnehmung
18 Führungsabschnitt
20 Formschlussabschnitt
22 Endabschnitt
26 Steg
28 Stirnrand
30 Eindrehelement/Innenmehrkantfläche
32 Wandung
34 Spannut
36 Stegwurzel
38 Stegseitenfläche
140 Abutment
141 Nutflächen
142 Nut
143 Nutkante
144 Führungsabschnitt
145 Außenmehrkantfläche
146 Formschlussabschnitt
148 Endabschnitt
150 Dichtkragen
152 Befestigungskopf
154 Halteschraube

## Patentansprüche

1. Enossales Einzelzahnimplantat für einen festsitzenden Zahnersatz, mit
- einem im Wesentlichen zylindrischen, in eine in einen Kieferknochen eingebrachte Bohrung einsetzbaren Grundkörper (10) mit einer Ringausnehmung (16) und mit einer zu seinem koronalen Ende hin offenen, apikal zu der Ringausnehmung (16) angeordneten Bohrung (12), die einen am apikalen Ende im Grundkörper angeordneten Gewindeabschnitt (14) zur Festlegung einer Halteschraube (154) aufweist, wobei die Ringausnehmung (16) einen Führungsabschnitt (18), einen sich koronal an den Führungsabschnitt (18) anschließenden Formschlussabschnitt (20) und einen sich koronal an den Formschlussabschnitt (20) anschließenden Endabschnitt (22) umfasst,
- einem in die Ringausnehmung (16) des Grundkörpers einsetzbaren Abutment (140) mit einem Führungsabschnitt (144), mit einem Formschlussabschnitt (146), mit einem Endabschnitt (148), mit einer Bohrung zur Aufnahme der Halteschraube (154) und mit einem Befestigungskopf (152) für den Zahnersatz, und
- einer in die Bohrung des Abutments (140) und des Grundkörpers (10) einsetzbaren und durchsetzenden Halteschraube (154),
- wobei der Formschlussabschnitt (20) des Grundkörpers (10) und der Formschlussabschnitt (146) des Abutments (140) zwei bis sechs in der Form zueinander komplementäre Formschlusselementpaare (26; 142) in Form von radial nach innen gerichteten und zur Längsachse des Grundkörpers koaxialen Federstegen (26) am Grundkörper (10) und korrespondierenden Nuten (142) mit Nutflächen (141) und zwei Nutkanten (143) am Abutment (140) nach Art einer Nut-Feder-Verbindung aufweisen, wobei der Formschlussabschnitt (20) des Grundkörpers (10) und der Formschlussabschnitt (146) des Abutments (140) ) zwei bis sechs in der Form zueinander komplementäre Innenkant-Außenkant-Paare in Form von Innenkantflächen am Grundkörper (10) und korrespondierenden Außenkantflächen am Abutment (140) aufweisen, die jeweils umfangsmäßig vorzugsweise alternierend mit den Formschlusselementen in Grundkörper (10) und Abutment (140) ausgebildet sind,
- wobei die Innenkantflächen (30) am Grundkörper (10) und die korrespondierenden Außenkantflächen (145) am Abutment (140) beim Einsetzen des Abutments (140) in den Grundkörper (10) zumindest teilweise zur Anlage kommen.

2. Enossales Einzelzahnimplantat für einen festsitzenden Zahnersatz, nach Anspruch 1, wobei jede zur Längsachse des Grundkörpers koaxiale Nutkante (143) der Nuten (142) an der zur Längsachse des Grundkörpers koaxialen Federstegwurzel (36) des korrespondierenden Federsteges (26) zur Anlage kommt.

3. Enossales Einzelzahnimplantat für einen festsitzenden Zahnersatz, nach Anspruch 1 oder 2, wobei die Stegseitenflächen (38) jedes Federsteges (26) am Grundkörper (10) und die Nutflächen (141) der Nuten (142) am Abutment (140) beim Einsetzen des Abutments (140) in den Grundkörper (10) zumindest teilweise zur Anlage kommen.

4. Abutment (140) für ein enossales Einzelzahnimplantat für einen festsitzenden Zahnersatz nach einem der Ansprüche 1-3, mit einem Führungsabschnitt (144), mit einem Formschlussabschnitt (146), mit einem Endabschnitt (148), mit einer Bohrung zur Aufnahme der Halteschraube und mit einem Befestigungskopf (152) für den Zahnersatz,
- wobei im Formschlussabschnitt (146) des Abutments (140) zwei bis sechs, insbesondere drei, zur Längsachse des Abutments koaxiale Nuten (142) mit Nutflächen (141) und Nutkanten (143), die zur Ausbildung einer Nut-Feder-Verbindung mit Federstegen (26) am Grundkörper (10) ausgebildet sind, angeordnet sind,
- wobei im Formschlussabschnitt (146) des Abutments (140) zwei bis sechs, insbesondere drei, Außenkantflächen (145), die zur Ausbildung eines Innenkant-Außenkant-Paares mit Innenkantflächen (30) am Grundkörper (10) ausgebildet und die umfangsmäßig jeweils vorzugsweise alternierend mit den Nuten (142) am Abutment (140) ausgebildet sind, und
- wobei jede zur Längsachse des Abutments koaxiale Nutkante (143) so ausgebildet ist, dass die Nutkante (143) in der Gebrauchsposition an der zur Längsachse des Grundkörpers (10) koaxialen Federstegwurzel (36) des korrespondierenden Federsteges (26) zur Anlage kommt, und
- wobei die Nutflächen (141) am Abutment (140) so ausgebildet sind, dass sie mit den korrespondierenden Stegseitenflächen (38) am Grundkörper (10) beim Einsetzen des Abutments (140) in den Grundkörper (10) zumindest teilweise zur Anlage kommen.

## Claims

1. Endosseous single tooth implant for a fixed tooth replacement, with
- a substantially cylindrical main body (10) which can be inserted into a bore made in a jawbone and has an annular recess (16) and a bore (12) which is open towards its coronal end and is arranged apically to the annular recess (16), which has a threading (14) arranged at the apical end in the main body for fixing a retaining screw (154), wherein the annular recess (16) comprises a guide section (18), a positive locking section (20) adjoining the guide section (18) coronally and an end section (22) adjoining the positive locking section (20) coronally,
- an abutment (140) which can be inserted into the annular recess (16) of the main body, with a guide section (144), with a positive locking section (146), with an end section (148), with a bore for receiving the retaining screw (154) and with a fastening head (152) for the tooth replacement, and
- a retaining screw (154) that can be inserted into the bore of the abutment (140) and the main body (10) and passes through it,
- wherein the positive locking section (20) of the main body (10) and the positive locking section (146) of the abutment (140) have two to six pairs of positive locking elements (26; 142) in the form of radially inwardly directed webs (26) on the main body (10), which are coaxial with the longitudinal axis of the main body, and corresponding grooves (142) with slot surfaces (141) and two slot edges (143) on the abutment (140) in the manner of a tongue-and-groove connection, wherein the positive-locking portion (20) of the main body (10) and the positive-locking portion (146) of the abutment (140) have two to six pairs of internal and external edges complementary in shape to one another in the form of internal edge surfaces on the main body (10) and corresponding external edge surfaces on the abutment (140), which are preferably formed circumferentially alternating with the positive-locking elements in the main body (10) and abutment (140),
- wherein the inner edge surfaces (30) on the main body (10) and the corresponding outer edge surfaces (145) on the abutment (140) at least partially come into contact when the abutment (140) is inserted into the main body (10).

2. Endosseous single-tooth implant for a fixed tooth replacement, according to claim 1, wherein each slot edge (143) of the slots (142) coaxial with the longitudinal axis of the main body comes to bear against the web root (36) of the corresponding web (26) coaxial with the longitudinal axis of the main body.

3. Endosseous single-tooth implant for a fixed tooth replacement, according to claim 1 or 2, wherein the web side surfaces (38) of each web (26) on the main body (10) and the slot surfaces (141) of the slots (142) on the abutment (140) at least partially come into contact when the abutment (140) is inserted into the main body (10).

4. Abutment (140) for an endosseous single-tooth implant for a fixed tooth replacement according to one of claims 1-3, with a guide section (144), with a positive-locking section (146), with an end section (148), with a bore for receiving the retaining screw and with a fastening head (152) for the tooth replacement,
- wherein two to six, in particular three, slots (142) coaxial with the longitudinal axis of the abutment with slot surfaces (141) and slot edges (143) are arranged in the positive locking section (146) of the abutment (140), which are formed to form a tongue-and-groove connection with webs (26) on the main body (10),
- wherein two to six, in particular three, outer edge surfaces (145) are formed in the positive locking section (146) of the abutment (140), which are designed to form an inner edge-outer edge pair with inner edge surfaces (30) on the main body (10) and which are each preferably formed circumferentially alternating with the grooves (142) on the abutment (140), and
- wherein each groove edge (143) coaxial with the longitudinal axis of the abutment is so formed that the groove edge (143) in the position of use comes to bear against the spring bar root (36) of the corresponding spring bar (26) coaxial with the longitudinal axis of the main body (10), and
- wherein the groove surfaces (141) on the abutment (140) are formed in such a way that they at least partially come into contact with the corresponding web side surfaces (38) on the main body (10) when the abutment (140) is inserted into the main body (10).

## Revendications

1. Implant unitaire endo-osseux pour une prothèse dentaire fixe, comprenant :
- un corps de base (10) essentiellement cylindrique, pouvant être inséré dans un alésage introduit dans un os de la mâchoire comprenant un évidement annulaire (16) et un alésage (12) disposé ouvert en direction de son extrémité coronale et apical par rapport à l'évidement annulaire (16), qui présente un tronçon de filetage (14) disposé sur l'extrémité apicale dans le corps de base pour fixer une vis de fixation (154), dans lequel l'évidement annulaire (16) comprend un tronçon de guidage (18), un tronçon à complémentarité de formes (20) se raccordant de manière coronale au tronçon de guidage (18) et un tronçon d'extrémité (22) se raccordant de façon coronale au tronçon à complémentarité de formes (20),
- un pilier (140) pouvant être inséré dans l'évidement annulaire (16) du corps de base, comprenant un tronçon de guidage (144), comprenant un tronçon à complémentarité de formes (146), comprenant un tronçon d'extrémité (148), comprenant un alésage pour recevoir la vis de fixation (154) et comprenant une tête de fixation (152) pour la prothèse dentaire, et
- une vis de fixation (154) traversante et pouvant être insérée dans l'alésage du pilier (140) et du corps de base (10),
- dans lequel le tronçon à complémentarité de formes (20) du corps de base (10) et le tronçon à complémentarité de formes (146) du pilier (140) présentent deux à six paires d'éléments à complémentarité de formes (26 ; 142) complémentaires entre eux par la forme, ayant la forme de tiges à ressort (26) sur le corps de base (10) dirigées radialement vers l'intérieur et coaxiales à l'axe longitudinal du corps de base, et de rainures (142) correspondantes avec des faces de rainure (141) et deux arêtes de rainures (143) sur le pilier (140) à la manière d'une liaison ressort-rainure, dans lequel le tronçon à complémentarité de formes (20) du corps de base (10) et le tronçon à complémentarité de formes (146) du pilier (140) présentent deux à six paires de rebords intérieurs-rebords extérieurs complémentaires entre eux par la forme, ayant la forme de faces de rebord intérieur sur le corps de base (10) et de faces de rebord extérieur correspondantes sur le pilier (140), qui sont réalisés de préférence sur le pourtour en étant respectivement en alternance avec les éléments de complémentarité de formes dans le corps de base (10) et le pilier (140),
- dans lequel les faces de rebord intérieur (30) sur le corps de base (10) et les faces de rebord extérieur (145) correspondantes sur le pilier (140) viennent au moins partiellement en appui lors de l'insertion du pilier (140) dans le corps de base (10).

2. Implant unitaire endo-osseux pour une prothèse dentaire fixe selon la revendication 1, dans lequel chaque arête de rainure (143) des rainures (142) coaxiale à l'axe longitudinal du corps de base vient en appui sur la racine de tige à ressort (36) coaxiale à l'axe longitudinal du corps de base de la tige à ressort (26) correspondante.

3. Implant unitaire endo-osseux pour une prothèse dentaire fixe selon la revendication 1 ou 2, dans lequel les faces latérales de tige (38) de chaque tige à ressort (26) sur le corps de base (10) et les faces de rainures (141) des rainures (142) sur le pilier (140) viennent au moins partiellement en appui lors de l'insertion du pilier (140) dans le corps de base (10).

4. Pilier (140) pour un implant unitaire endo-osseux pour une prothèse dentaire fixe selon l'une des revendications 1 - 3, comprenant un tronçon de guidage (144), comprenant un tronçon à complémentarité de formes (146), comprenant un tronçon d'extrémité (148), comprenant un perçage pour recevoir la vis de fixation et comprenant une tête de fixation (152) pour la prothèse dentaire,
- dans lequel sont disposées dans le tronçon à complémentarité de formes (146) du pilier (140), deux à six, en particulier trois, rainures (142) coaxiales à l'axe longitudinal du pilier, avec des faces de rainures (141) et des arêtes de rainures (143) qui sont conçues pour former une liaison rainure-ressort avec des tiges à ressort (26) sur le corps de base (10),
- dans lequel sont disposées dans le tronçon à complémentarité de formes (146) du pilier (140), deux à six, en particulier trois, faces d'arête extérieures (145) qui sont conçues pour former une paire de rebords intérieurs-rebords extérieurs avec des faces d'arête intérieures (30) sur le corps de base (10) et qui sont réalisées de préférence sur le pourtour en étant respectivement en alternance avec les rainures (142) sur le pilier (140), et
- dans lequel chaque arête de rainure (143) coaxiale à l'axe longitudinal du pilier est ainsi formée que l'arête de rainure (143), dans la position d'utilisation, vient en appui sur la racine de tige à ressort (36) coaxiale à l'axe longitudinal du corps de base (10) de la tige à ressort (26) correspondante, et
- dans lequel les faces de rainures (141) sur le pilier (140) sont ainsi conçues, qu'elles viennent au moins partiellement en appui avec les faces latérales de tige (38) sur le corps de base (10) lors de l'insertion du pilier (140) dans le corps de base (10).
